# EUROPEAN PATENT APPLICATION

(11) **EP 1 715 423 A1**
(43) Date of publication of application: **25.10.2006**
(21) Application number: 05103099.7
(22) Date of filing: 18.04.2005
(51) Int. Cl.: G06F 11/00

(54) **Method for monitoring function execution**

(71) Applicant: Research In Motion Limited, Waterloo, Ontario N2L 3W8 (CA)
(72) Inventor: Qing, Richard, K2G 5G6, Ottawa, (CA); Shenfield, Michael, L4C 3S9, Richmond Hill, (CA); Vitanov, Kamen B., L5M 6E8, Mississauga, (CA); Doktorova, Laura, L5M 6E1, Mississauga, (CA); Rogers, Jeffrey, M1E 1B3, Scarborough (CA)
(74) Representative: Rickard, David John

(57) **Abstract**

An endless script or other function is considered to be malicious as it exhausts system resources such as CPU time and memory. Therefore, the handling of an endless function execution is crucial, particularly in a wireless runtime environment. A combination of time-out and user-interruption scheme is used to detect and handle the problem.

## Description

The invention relates to the field of computers. More precisely, the invention pertains to the field of a method for monitoring function execution and handling of an endless function execution.

The skilled addressee will appreciate that having an endless function execution (e.g. a script or other piece of code) is not desirable for a processing unit. In some case, an endless malicious script may be used to exhaust system resources such as CPU (Central Processing Unit) time and memory.

Being able to handle an endless function execution is therefore crucial, particularly in a wireless runtime environment where processing as well as communicating resources is limited and costly.

It is known to be able to monitor an application in an operating system such as Microsoft^{(™)} Windows^{(™)}. Unfortunately, the monitoring available is limited only to the application level which is a major drawback.

In fact, the skilled addressee will appreciate that if an endless script/loop is running on a given application, the whole given application becomes dependent from the endless script/loop. With the limitations of the prior art, the user has no choice but to end the whole given application to stop the endless script which often causes loss of data and frustration for the user.

There is therefore a need for a method for monitoring function execution that will overcome at least one of the above identified drawbacks.

An endless script or other function is considered to be malicious as it exhausts system resources such as CPU time and memory. Therefore, the handling of an endless function execution is crucial, particularly in a wireless runtime environment. A combination of time-out and user-interruption scheme is used to detect and handle the problem.

In one aspect of the present invention there is provided a method for monitoring the execution of a function, said method comprising monitoring at least one parameter associated with an execution of a function; and
stopping the execution of the function in response to a failure to comply with at least one of said at least one parameter.

Monitoring may commence in response to an event and may comprise collecting usage information data according to said function to be monitored. Collecting of usage information data may begins after expiration of a delay which delay may be determined depending on said function to be monitored.

An indication is provided to a user in response to said collecting usage information data. The indication preferably comprises suggesting to said user to stop execution of the function in the case of a failure to comply with at least one of said at least one parameter. In such as case, the function execution is stopped in responsive to a user input in reply to said suggesting.

Collecting of the usage information data may comprise collecting information data from at least one of a resource, a service and the function.

In accordance with a further aspect, there is provided a method for monitoring an application comprising a plurality of function execution threads, the method comprising: monitoring at least one parameter associated with an execution of said plurality of function execution threads; identifying at least one of the plurality of functions threads having a corresponding parameter which does not comply; and stopping an execution of the at least one of the plurality of function execution threads in response to said identifying.

Yet a further aspect provides a computer readable memory comprising a plurality of instructions for configuring a processor when executed to perform any of the methods. As well, there is a device for processing data comprising: a processor coupled to a memory storing instructions and data to configure the processor to run at least one function execution thread, said instructions and data further configuring the processor to: monitor at least one parameter associated with the function execution thread; and stop executing said function execution thread in response to a failure to comply with at least one of said at least one parameter.

These and other features of the invention will be apparent from review of the disclosure, drawings and description of the invention below.

### DESCRIPTION OF THE DRAWINGS

In order that the invention may be readily understood, embodiments of the invention are illustrated by way of example in the accompanying drawings.

Figure 1 is a block diagram showing a plurality of wireless processing devices in which the invention may be implemented;

Figure 2 is a flowchart showing how a function execution thread is monitored according one embodiment of the invention;

Figure 3 is a block diagram showing how an execution monitoring thread collects information with respect to the function execution thread and resources and services for providing to a user interface within a n application container runtime environment according to one embodiment of the invention;

Fig. 4 is a flowchart showing one embodiment for monitoring a function execution thread in which, *inter alia,* the expiration of a delay is checked, usage information data is collected and an indication is provided to a user;

Fig. 5 is a flowchart showing how usage information data is collected in one embodiment of the invention;

Fig. 6 is a flowchart showing how the indication is provided to the user according to one embodiment of the invention; and

Fig. 7 is a flowchart showing how function execution threads of an application may be advantageously managed according to an embodiment of the invention.

Further details of the invention and its advantages will be apparent from the detailed description included below.

### DETAILS

In this specification, the term "thread" is intended to mean "a semi-process that has its own stack and executes a given piece of code".

In this specification, the term "function execution thread" is intended to mean "a semi-process that has its own stack and executes a function to be monitored".

In the following description of the embodiments, references to the accompanying drawings are by way of illustration of an example by which the invention may be practiced. It will be understood that other embodiments may be made without departing from the scope of the invention disclosed.

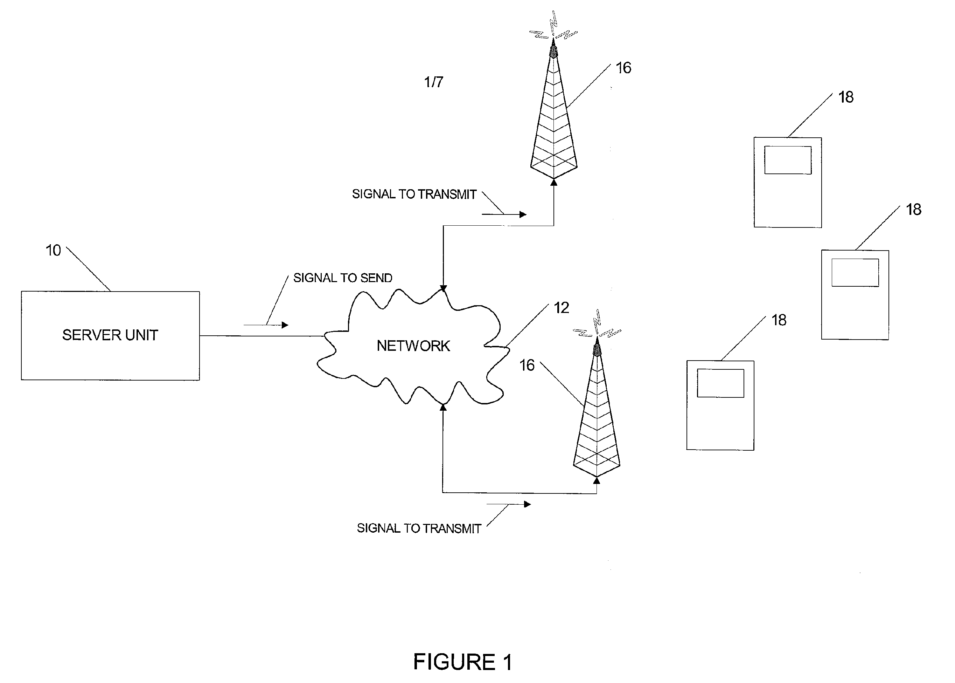

Now referring to Fig. 1, there is shown an embodiment of a system wherein a function execution thread may be monitored according to one embodiment of the invention.

The system comprises a server unit 10, a network 12, a plurality of transmitting devices 16 and a plurality of user devices 18.

The server unit 10 is adapted for providing a signal to send to the plurality of user devices 18. The server unit 10 may comprise any type of processing unit that is connected permanently or temporarily with the plurality of user devices 18.

The network 12 comprises at least one of a Local Area Network (LAN), a Metropolitan Area Network (MAN) and a Wide Area Network (WAN). In an embodiment, the network 12 comprises a Wide Area Network which is the Internet.

The plurality of transmitting devices 16 comprises wireless transmitters adapted to transmit data to the plurality of user devices 18.

The plurality of user devices 18 comprises devices that are adapted to process at least data. In one embodiment, shown in Fig. 1, the plurality of user devices 18 are wireless user devices. It should be appreciated that various types of devices may be used such as Personal Digital Assistants (PDAs), smart phones, etc. In a preferred embodiment, the plurality of user devices 18 comprises Blackberry^{(™)} devices which are manufactured by Research In Motion Limited. It will be appreciated by the skilled addressee that the plurality of user devices 18 comprises a plurality of applications, each running at least one function execution thread, which may be monitored as explained below. It will also be appreciated that corresponding application data is provided for each application.

More precisely, the server unit 10 is adapted to provide to the network 12, *inter alia,* a signal to send.

At least one of the plurality of transmitting devices 16 is adapted to transmit a signal to at least one of the plurality of user devices 18.

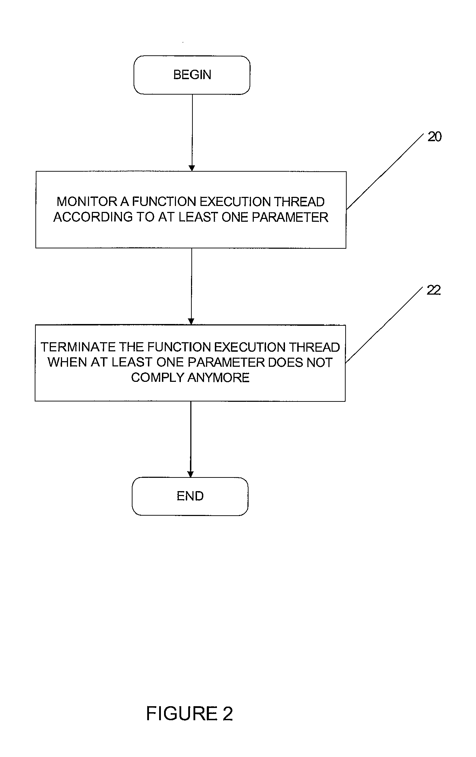

Now referring to Fig. 2, there is shown how a function execution thread of an application is monitored according one embodiment of the invention. It will be appreciated that the function execution thread may be monitored for the purpose of detecting an endless loop. Alternatively, the monitoring may be used to detect other function behaviors such as the consumption of resources or services provided by the runtime environment in which the function is executing or unauthorized attempts to access resources or services which may be governed in accordance with security policies associated with the specific application to which the function belongs. Alternatively, the monitoring may be used to detect the absence of preconditions of the function execution. For instance, a function may be started and during its execution, the absence of one of its preconditions is detected. For instance, the function might need network access but suddenly the wireless device might go out of coverage for a certain amount of time. In such case, it might be pertinent to notify the user.

According to step 20, a function execution thread is monitored according to at least one parameter.

It will be appreciated that the function execution thread is monitored by an execution monitoring thread that is running on the same wireless device on which the function execution thread to monitor is running. In another embodiment, the execution monitoring thread is running on another processing unit.

According to step 22, execution of the monitored function execution thread is stopped, as described further below, when at least one parameter does not comply anymore.

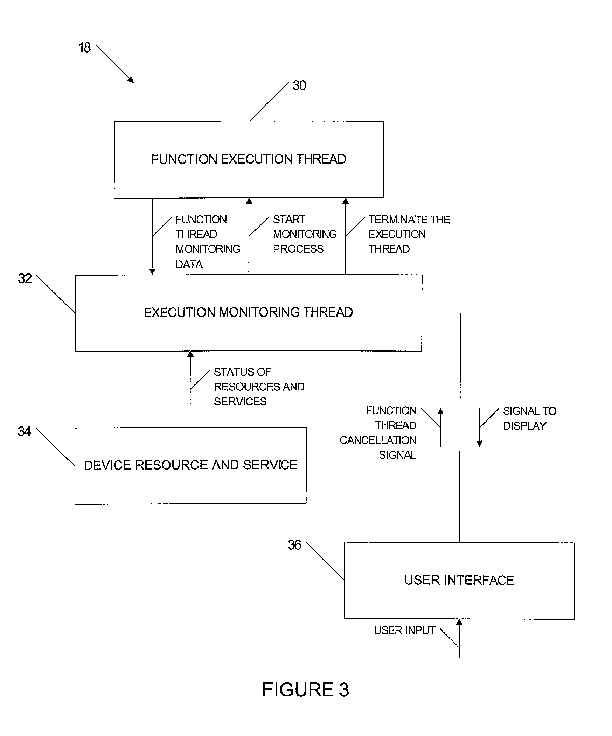

Now referring to Fig. 3, there is shown an embodiment disclosing how the function execution thread is monitored.

An execution monitoring thread 32 is running and, in one embodiment, provides a start monitoring process signal to the function execution thread.

The start monitoring process signal may be provided depending on an event such as the start of the execution of the function by a particular thread. Alternatively, no start monitoring process signal is provided. In such case, any function execution thread running is monitored. In a preferred embodiment, an execution monitoring thread 32 is running for each application.

In response to the start monitoring process signal provided to the function execution thread 30, the execution monitoring thread 32 receives a function execution thread monitoring data signal from the function execution thread 30. The function execution thread monitoring data signal comprises information such as a timeout amount for instance. The skilled addressee will appreciate that various other values may be monitored. In fact, the skilled addressee will appreciate that preferably, for each variable to monitor, a compliance threshold may be provided. Monitoring thread 32 may determine particular information (e.g. values of parameters) in other manners that as a signal from the function execution thread.

The execution monitoring thread 32 may further receive a signal indicative of the status of resources and services 34 of the runtime environment for the function such as via an application program interface (API) within the runtime environment such as an application container. The skilled addressee will appreciate that the mechanism to provide information about device resources and services 34 may be any suitable combination of software/hardware for providing such information. The information collected may comprise an indication of a usage of a network connection, an indication of a level of use of the CPU by the function execution thread 30, an indication of a level of use of a random access memory (RAM) by the function execution thread 30, a use of local file system (such as am amount of data accessed read and write) by the function execution thread 30, etc.

The indication of a level of use of a network connection may comprise parameters such as remote server or services to which the wireless device is connected to, an amount of data exchanged, a communication strategy used or port number used for communication, etc.

The skilled addressee will appreciate that the signal indicative of the status of resources and service depends on the function execution thread 30 that is monitored. For instance, an indication of a usage of a network connection may not be pertinent in the case where the monitored function execution thread 30 is not supposed to access a network.

Also it should be appreciated that in one embodiment the signal of the status of resources and services may be provided in response to an event (i.e. pull mode) while in another embodiment, the signal of the status of resources and service may be provided continuously (i.e. push mode).

The execution monitoring thread 32 provides a signal to display to a user interface 36.

The user interface is adapted to display a signal to a user and is also adapted to collect an input from the user.

The user interface 36 may further provide a function execution thread cancellation signal to the execution monitoring thread 32.

In response to the function execution thread cancellation signal, the execution monitoring thread 32 may send a stop execution thread signal which is sent, in one embodiment, on behalf of a user to the function execution thread 30.

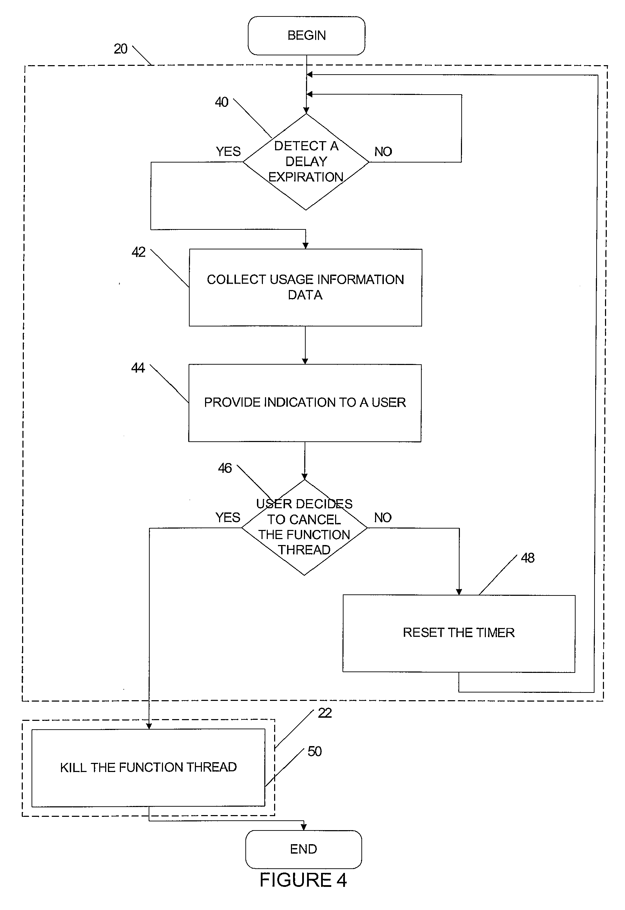

Now referring to Fig. 4, there is shown an embodiment disclosing how the function execution thread 30 of an application may be monitored according one embodiment of the invention.

According to step 40, a delay expiration is detected. It will be appreciated that the length of the delay may be provided depending on the type of function execution thread 30 to monitor. In one embodiment, the delay is set to 1 minute.

In the case where the delay expires and according to step 42, usage information data is collected.

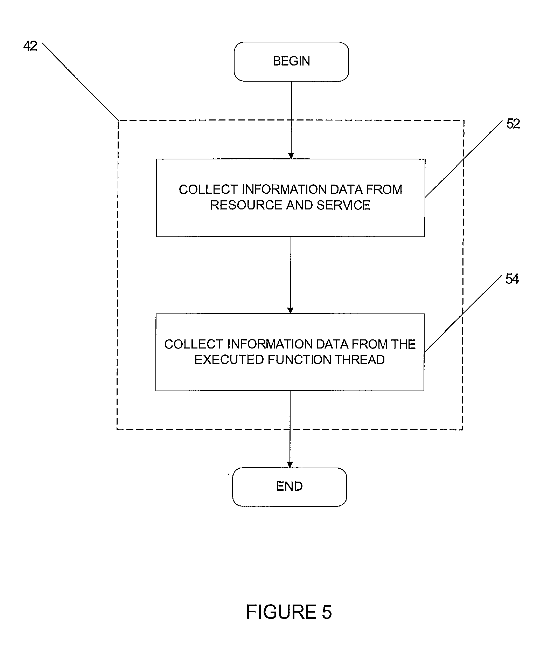

Now referring to Fig. 5, there is shown an embodiment for collecting the usage information data.

According to step 52, information data from the device resource and service unit 34 is collected. As explained previously, the type of data collected depends on the executed function execution thread 30. The information data from the device resource and service unit 34 is collected by the execution thread 32.

According to step 54, information data is collected from the executed function execution thread 30. Also the type of data collected depends on the function execution thread 30. The information data collected from the function execution thread 30 executed depends on the function execution thread 30 executed.

The skilled addressee should appreciate that steps 52 and 54 may be switched in time.

Now referring back to Fig. 4 and according to step 44, an indication is provided to a user.

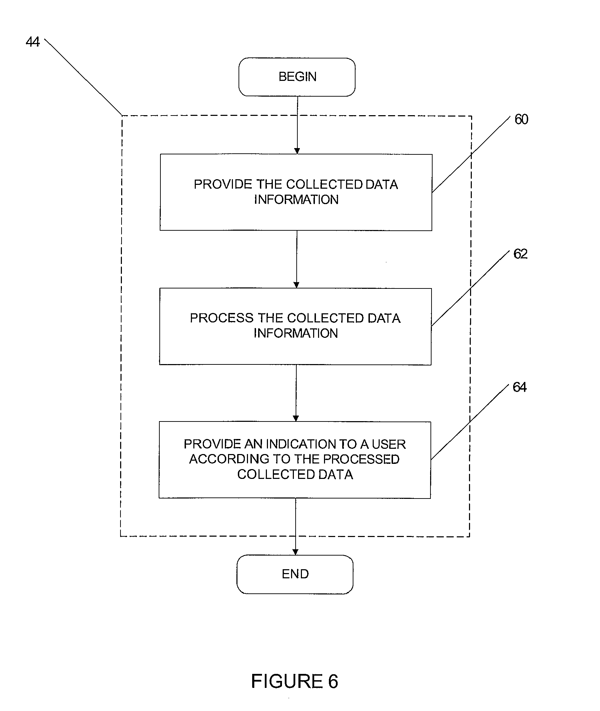

Now referring to Fig. 6, there is shown an example of how the indication is provided to the user.

According to step 60, the collected data information, collected at step 52 and 54, is provided to the execution monitoring thread 32.

According to step 62, the collected data information is processed. In one embodiment, the collected data information is processed by the execution monitoring thread 32. Alternatively, the collected data information is processed using another thread located or not in the wireless processing device.

Also it should be understood that the processing is performed in accordance with at least one criteria. It should be understood by the skilled addressee that the criteria are setup based on monitoring requirements that are runtime environment dependent and further on threshold values obtained as statistical data from relevant experiments. The at least one criteria depends on the function execution thread 30 to be monitored.

Still referring to Fig. 6 and according to step 64, an indication is provided to a user according to the processed information data. It will be appreciated by the skilled addressee that preferably the indication is provided to the user in the case where the processed information data exceeds a predefined threshold. Again, it will be appreciated that the predefined threshold depends on the type of function execution thread 30 to be monitored.

In the preferred embodiment the indication is provided to the user using the user interface 36. Alternatively, the indication may be provided to a remote unit (a server) which has a policy for each function execution thread running on a wireless device operating on the network and which could take the decision to cancel the application by itself. The skilled addressee will appreciate however that such alternative embodiment may not be practical in the case where the wireless device goes out of coverage.

It will be appreciated that the indication is preferably displayed using a pop-up. Still in the preferred embodiment, at least one part of the processed information data is displayed and a suggestion to stop (cancel) the execution is provided. Stopping the execution of the function may comprise terminating the execution of the function per se while leaving its supporting execution thread available for subsequent execution or killing and removing the function execution thread itself.

It will be appreciated that such providing of information may be of great advantage for helping the user to make an informed decision.

Now referring back to Fig. 4 and in the case where the user does not decide to cancel the function execution thread 30 and according to step 48, the timer is reset.

In the case where the user decides to cancel the function execution thread 30 and according to step 50, the function execution thread 30 is killed or terminated whereby the function execution is stopped but the thread itself remains "alive" ready for a subsequent instance of execution. The skilled addressee will also appreciate that in such case, the timer is also reset.

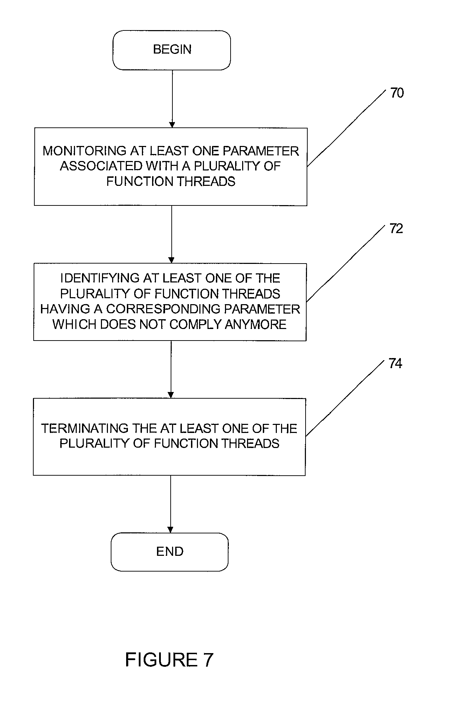

Now referring to Fig. 7, there is shown an embodiment where the embodiment disclosed in Fig. 2 may be advantageously used. More precisely, the embodiment may be advantageously used in an application comprising a plurality of function execution threads to monitor.

According to step 70, at least one parameter associated with a plurality of function execution threads is monitored.

According to step 72, at least one of the plurality of function execution threads having a corresponding parameter which does not comply anymore is identified.

According to step 74, execution of the at least one of the plurality of function execution threads having a corresponding parameter which does not comply anymore is stopped.

The skilled addressee will appreciate that such a way to monitor function execution is of great advantage as it enables a fine-grained control over the behavior of an application which enables the user to stop certain functions which use too much of the system resources (e.g. an endless loop) or cannot be conducted under certain circumstances (e.g. system memory is low and overhead to manage execution such as garbage collection or memory page handing is inordinately delaying execution) while keeping or using other functions of the application.

It will be appreciated that the method of monitoring function execution may be implemented either in an application or in an application container; i.e., EJB container or Java^{(™)} Servlet container in an enterprise level application runtime environment. The application runtime environment offers basic resources and services that are needed for application execution. An application definition including one or more function definitions can be loaded into the application container which executes the application in accordance with the definitions.

The skilled addressee will appreciate in the disclosed embodiment, the application or the application container is enabled to provide the monitoring of function execution rather than at a system level. This enables the creation of execution monitoring threads 32 which are custom-made for a specific application.

Also the skilled addressee will appreciate that such embodiment preferably automatically sends an early alert to the user by providing the indication to the user. Such an embodiment therefore does not require the user to launch a task monitoring application after contemplating a problematic situation.

Although the above description relates to a specific preferred embodiment as presently contemplated by the inventor, it will be understood that the invention in its broad aspect includes mechanical and functional equivalents of the elements described herein.

## Claims

1. A method for monitoring the execution of a function, said method comprising:
monitoring at least one parameter associated with an execution of a function; and
stopping the execution of the function in response to a failure to comply with at least one of said at least one parameter.

2. The method as claimed in claim 1, wherein said monitoring begins in response to an event.

3. The method as claimed in any one of claims 1 to 2, wherein said monitoring comprises collecting usage information data according to said function to be monitored.

4. The method as claimed in claim 3, wherein said collecting of said usage information data begins after expiration of a delay.

5. The method as claimed in claim 4, wherein said delay is determined depending on said function to be monitored.

6. The method as claimed in any one of claims 3 to 5, comprising providing an indication to a user in response to said collecting usage information data.

7. The method as claimed in claim 6, wherein said providing an indication comprises suggesting to said user to stop execution of the function in the case of a failure to comply with at least one of said at least one parameter.

8. The method as claimed in claim 7, wherein said stopping the execution is further responsive to a user input in reply to said suggesting.

9. The method as claimed in any one of claims 3 to 8, wherein said collecting of said usage information data comprises collecting information data from at least one of a resource, a service and said function.

10. The method as claimed in claim 7, wherein said providing of an indication to a user in response to said collecting usage information data further comprises processing said collected usage information data and further wherein said indication is provided in accordance with said processing of said collected usage information data.

11. The method as claimed in any one of claims 1 to 10, wherein the method is adapted to monitor an application comprising a plurality of function execution threads, by:
monitoring at least one parameter associated with an execution of said plurality of function execution threads;
identifying at least one of the plurality of functions threads having a corresponding parameter which does not comply; and
stopping an execution of the at least one of the plurality of function execution threads in response to said identifying.

12. A computer readable medium comprising a plurality of instructions for configuring a processor when executed to perform the method as claimed in any one of claims 1 to 11.

13. A device for processing data comprising:
a processor coupled to a memory storing instructions and data to configure the processor to run at least one function execution thread, said instructions and data further configuring the processor to:
monitor at least one parameter associated with the function execution thread; and
stop executing said function execution thread in response to a failure to comply with at least one of said at least one parameter.
